# EUROPEAN PATENT SPECIFICATION

(11) **EP 4 140 631 B1**
(45) Date of publication and mention of the grant of the patent: **06.05.2026**
(21) Application number: 20942070.2
(22) Date of filing: 02.11.2020
(51) Int. Cl.: B23K 11/14, F16B 11/00, F16B 37/06, F16B 43/00, F16B 5/02, B23K 11/00, B23K 103/20, B23K 11/20, F16B 41/00

(54) **DISSIMILAR MATERIAL JOINT STRUCTURE AND METHOD FOR JOINING DISSIMILAR MATERIALS**
VERBINDUNGSSTRUKTUR AUS UNTERSCHIEDLICHEM MATERIAL UND VERFAHREN ZUR VERBINDUNG VON UNTERSCHIEDLICHEN MATERIALIEN
STRUCTURE D'ASSEMBLAGE DE MATÉRIAUX DIFFÉRENTS ET PROCÉDÉ D'ASSEMBLAGE DE MATÉRIAUX DIFFÉRENTS

(30) Priority: 25.06.2020 JP 2020109456
(43) Date of publication of application: 01.03.2023
(73) Proprietor: Seki Kogyo Co., Ltd., Hatsukaichi-shi, Hiroshima, 738-0034 (JP)
(72) Inventor: MIURA, Masaaki, Hatsukaichi-shi, Hiroshima 738-0034 (JP); MIURA, Seiji, Hatsukaichi-shi, Hiroshima 738-0034 (JP); SAKOTA, Kouji, Hatsukaichi-shi, Hiroshima 738-0034 (JP)
(74) Representative: Germain Maureau
(86) International application number: PCT/JP2020/041086
(87) International publication number: WO 2021/260963

(56) References cited:
- DE-B- 1 055 717
- JP-A- 2010 240 678
- JP-A- H0 985 454
- JP-A- H09 206 955
- JP-A- S5 868 511
- KR-A- 20170 011 653
- US-A1- 2016 167 158

## Description

### TECHNICAL FIELD

The present invention relates to a dissimilar material joint structure and a dissimilar material joining method.

### BACKGROUND ART

Spot welding is often used for welding steel materials. In recent years, it has been attempted to join two members of different materials by spot welding, so that a lightweight material, such as aluminum can be utilized in view of reducing the weights of machines and instruments.

For example, Patent Document 1 discloses a plate lamination structure (joint structure) including a first plate member, and second and third plate members provided respectively on either surface of the first plate member, where the second and third plate members are spot-weldable to each other. The first plate member is made of a material different from the second and third plate members and has a positioning hole. The first plate member is not welded to the second and the third plate members. The second plate member has a positioning projection corresponding to the positioning hole of the first plate member. The positioning projection is fitted in the positioning hole of the first plate member. The second and third plate members are then spot-welded with each other at the positioning projection fitted in the positioning hole of the first plate member.

In this configuration, the second and third plate members are welded to each other via the positioning hole of the first plate member at a welding point, and because no first plate member of the different material is present at the welding point, a high weld strength can be attained. This makes it possible to joint these three plate members firmly. Further, Patent Document 2 discloses an intermediate link for workpieces to be joined by projection welding.

### CITATION LIST

### PATENT DOCUMENT

Patent Document 1: Japanese Unexamined Patent Publication No. 2010-240678
Patent Document 2: German Patent Applicaiton Publication No. DE1055717B

### SUMMARY OF THE INVENTION

### TECHNICAL PROBLEM

In case of assembling a component (i.e., a workpiece) to a plate member with a bolt and a nut, there is such a case that the plate member includes a tightening member, for example, a weld nut (i.e., a projection nut) with a projection, the tightening member being spot-welded to the plate member in advance.

Here, if the weld nut and the plate member are made of dissimilar materials different from each other, it is difficult to secure a sufficient joint strength (i.e., weld strength) between the weld nut and the plate member.

To address the problem, it is conceivable to adopt the joint structure according to Patent Document 1. That is, the plate member may be modified to have a hole for letting the projection of the weld nut penetrate therethrough. A component weldable to the weld nut is additionally provided. The projection penetrating the hole is welded to the weldable component so as to join the weld nut to the plate member.

This joint structure, however, requires a dedicated member additionally provided only for joining the weld nut to the plate member, undesirably in view of simplification, and weight and cost reductions of machines and instruments.

The same applies to a configuration in which a weld bolt, instead of the weld nut, is joined to the plate member.

The present invention was made in view of the problems. It is a main object of the present invention to eliminate the need for a member only for joining a tightening member and a plate member, which are made of different materials.

### SOLUTION TO THE PROBLEM

A dissimilar material joint structure is provided according to claim 1.

According to this configuration, the first tightening member is not directly welded to the front surface of the plate member but welded to the washer on the back surface of the plate member, with the projection penetrating the projection through-hole. That is, the first tightening member is welded to the washer with the plate member interposed therebetween via the projection through-hole (the projection) so as to be joined to the front surface of the plate material. This allows joining of even the first tightening member and the plate member made of different materials that are difficult to weld.

When assembling a component (i.e., a workpiece) to the back surface of the plate material with a bolt and a nut, the second tightening member is screwed down to the first tightening member with one of the first and second tightening members, which is the bolt, passing through the bolt through-holes of the washer and the plate member.

The tightening torque for screwing the second tightening member down to the first tightening member biases the first tightening member to rotate with respect to the plate member. Here, the first tightening member and the washer are welded with the plate member interposed therebetween via the projection through-hole (the projection), whereby the first fastening member and the washer are joined to the either surfaces of the plate material as if being pseudo-pressure-bonded thereto.

This is advantageous in reducing the rotation of the first tightening member with respect to the plate member. That is, the washer has not only the function of joining the first tightening member to the plate member, but also the function of reducing the rotation of the first tightening member with respect to the plate member. If the component is made of a soft material, such as aluminum, a resin, or fibers, the washer can also have the function of preventing loosening of the second tightening member.

As described above, in this configuration, the washer has the functions other than joining the first tightening member to the plate member. There is thus no need to prepare any dedicated member only for joining the first tightening member to the plate member.

In the dissimilar material joint structure provided according to claim 1, each of the projection and the projection through-hole is longer in a radial direction than in a circumferential direction about the center axis.

The application of the tightening torque for screwing the second tightening member down to the first tightening member causes the outer peripheral surface of each projection (facing in the tangential direction) of the first tightening member or the washer to be pressed onto the inner peripheral surface (facing in the tangential direction) of the corresponding projection through-hole of the plate member. This configuration provides a larger contact area between the tangential direction-facing outer peripheral surface of the projection and the tangential direction-facing inner peripheral surface of the projection through-hole. This reduces the stress (the pressing force/ the contact area) received by the tangential direction-facing inner peripheral surface of the projection through-hole from the tangential direction-facing outer peripheral surface of the corresponding projection. Accordingly, this configuration can bear a larger tightening torque.

In one embodiment, the washer is fitted in a recess on the back surface of the plate member.

This configuration facilitates the positioning of the washer on the back surface of the plate member.

In one embodiment, the washer and the recess are polygonal in transverse cross-section, corresponding to each other.

The tightening torque for screwing the second tightening member down to the first tightening member biases the first tightening member to rotate with respect to the plate member. This causes the projection to pull the washer, thereby biasing the washer to rotate with respect to the plate member. In this configuration, the inner peripheral surface of a recess catches a corner of the washer being biased to rotate, thereby preventing the washer from rotating. That is, the configuration also prevents the rotation of the first tightening member welded to the washer.

In one embodiment, the first tightening member is the nut, and the second tightening member is the bolt.

In one embodiment, the projection is located on the bearing surface of the first tightening member.

A dissimilar material joining method is provided according to claim 6.

### ADVANTAGES OF THE INVENTION

The present invention eliminates the need for any member only for joining a tightening member and a plate member, which are made of different materials.

### BRIEF DESCRIPTION OF THE DRAWINGS

FIG. 1 is a front cross-sectional view showing a dissimilar material joint structure according to one embodiment of the present invention.
FIG. 2 is a front view of a weld nut.
FIG. 3 is a plan view showing a bearing surface of the weld nut.
FIG. 4 is a plan view showing the back surface of a plate member.
FIG. 5 is a plan view of a washer.
FIG. 6 shows how a tightening torque for screwing a component assembling bolt down to the weld nut causes an outer peripheral surface of a projection to be pressed onto an inner peripheral surface of a projection through-hole, as viewed from the back surface of the washer.
FIG. 7 shows a washer and a recess on a back surface of a plate member according to another embodiment.
FIG. 8 is a view corresponding to FIG. 1, illustrating yet another embodiment (where a washer has a projection on a bearing surface thereof).
FIG. 9 is a view corresponding to FIG. 1, illustrating still another embodiment (where a first tightening member is a weld bolt and a second tightening member is a component assembling nut).

### DESCRIPTION OF EMBODIMENTS

Hereinafter, an embodiment of the present invention will be described in detail with reference to the drawings. The following description of an advantageous embodiment is merely illustrative in nature, and is not at all intended to limit the scope, applications or use of the present invention, which is solely limited by the wording of the appended claims.

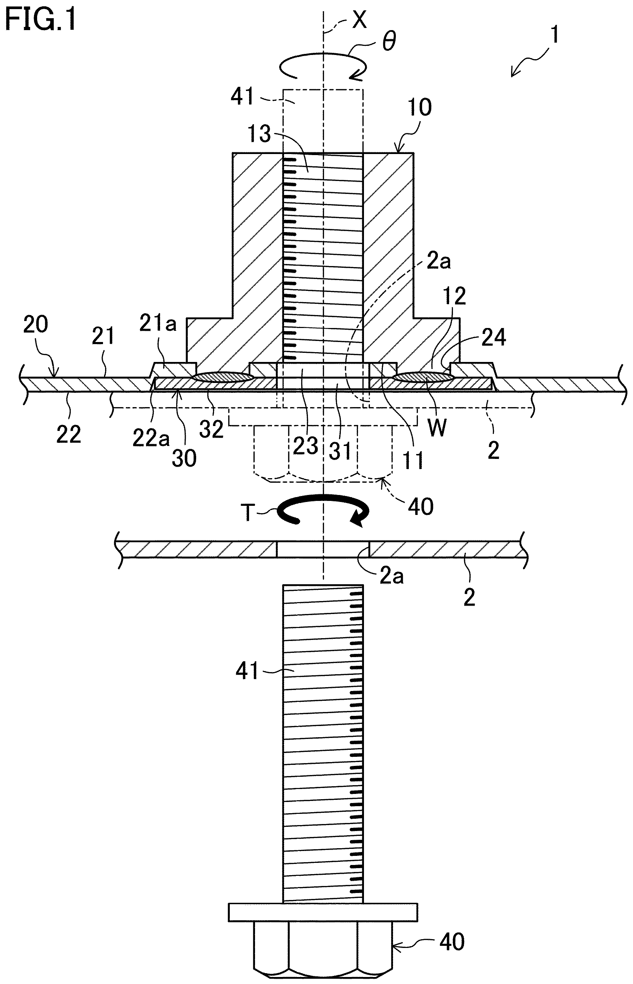

As shown in FIG. 1, a dissimilar material joint structure 1 according to this embodiment is for joining a weld nut 10 as a first tightening member to a plate member 20 in a plate form. In FIG. 1, X denotes the center axis of the weld nut 10. In this specification, a "front" of the plate member 20 is that side of the plate member 20 on which the weld nut (i.e., the first tightening member) 10 is placed and a "back" of the plate member 20 is that side of the plate member 20 on which a washer 30, which will be described later, is placed. The wordings "front" and "back" are not intended to mean actual front and back sides of the plate member 20 itself.

The weld nut 10 is made of steel, for example. The plate member 20 is made of aluminum (which may be an aluminum alloy), for example. That is, the weld nut 10 and the plate member 20 are made of dissimilar materials different from each other. Welding the weld nut 10 to the plate member 20 is thus difficult. The phrase "dissimilar materials" means a combination of different materials that are generally difficult to weld to each other.

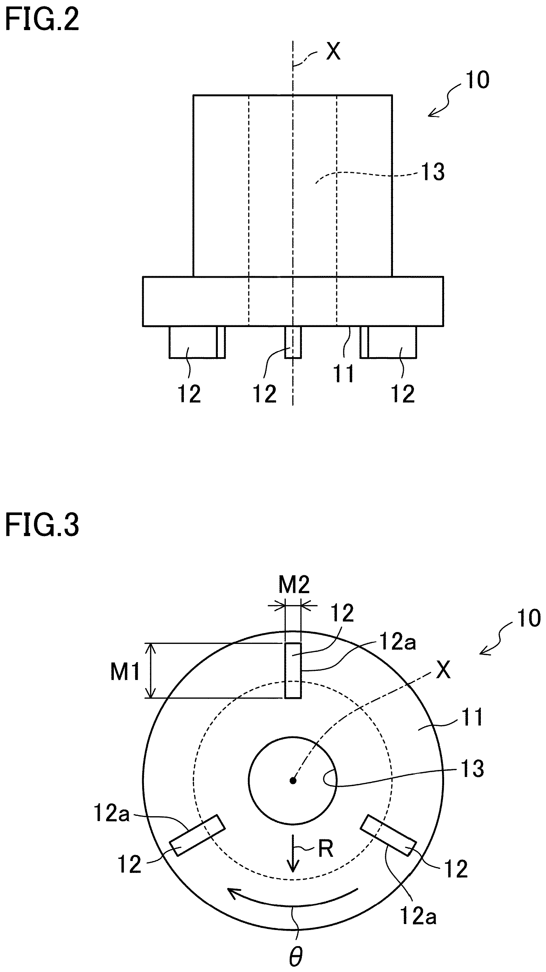

As illustrated in FIGS. 2 and 3, the weld nut (i.e., a projection nut) 10 has a plurality of projections 12 on a bearing surface 11 thereof. In this embodiment, the weld nut 10 includes three projections 12.

The weld nut 10 is penetrated by a bolt hole 13 on the center axis X. The bolt hole 13 may be slightly eccentric from the center axis X, as long as at least a part of the bolt hole 13 is on the center axis X.

Each projection 12 is longer in a normal direction (i.e., a radial direction, a radiation direction) R than in a tangential direction (a circumferential direction) *θ* of a circle about the center axis X. In this embodiment, each projection 12 is rectangular with long sides M1 in the normal direction R and short sides M2 in the tangential direction *θ*. The projections 12 are arranged at equal intervals in the tangential direction *θ*.

As illustrated in FIG. 1, the plate member 20 has a projection portion 21a on the front surface 21 and a recess portion 22a on the back surface 22 as a result of fabrication by press processing. The projection and recess portions 21a and 22a are circular, for example, as viewed from the front surface 21 and the back surface 22 of the plate member 20. That is, the projection and recess portions 21a and 22a are circular in transverse cross-section (orthogonal to the center axis X). The weld nut 10 is placed on the projection portion 21a of the front surface 21 of the plate member 20.

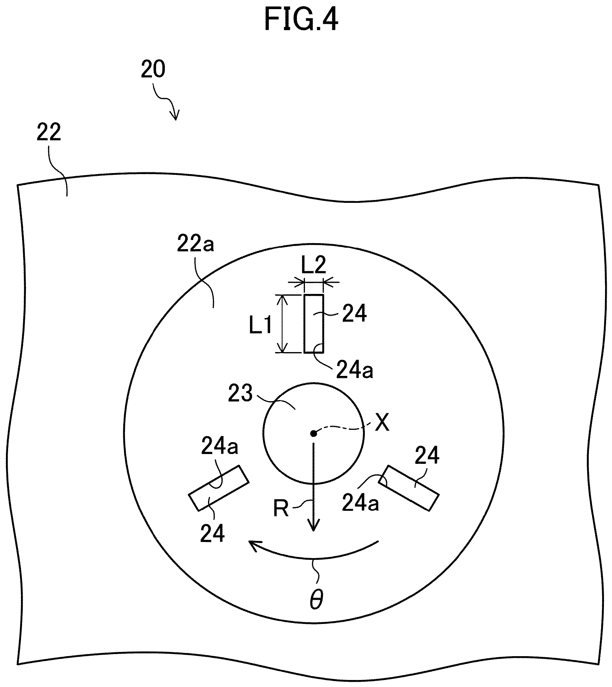

As shown in FIG. 4, the plate member 20 has a bolt through-hole 23 and a plurality of projection through-holes 24. In this embodiment, the plate member 20 has three projection through-holes 24. The bolt through-hole 23 and the projection through-holes 24 are provided in the projection and recess portions 21a and 22a of the plate member 20.

The bolt through-hole 23 is located on the center axis X of the weld nut 10 and penetrates the plate member 20. The bolt through-hole 23 is for passing a screw 41 of a component assembling bolt 40 (see FIG. 1) as a second tightening member corresponding to the weld nut (i.e., the first tightening member) 10. The bolt through-hole 23 may be slightly eccentric from the center axis X, as long as at least a part of the bolt through-hole 23 is on the center axis X.

The projection through-holes 24 are arranged on a periphery of the bolt through-hole 23 and penetrate the plate member 20. Each projection through-hole 24 corresponds to one of the projections 12 of the weld nut 10 and is penetrated by the projection 12. Each projection through-hole 24 is longer in the normal direction R than in the tangential direction *θ* of a circle about the center axis X. In this embodiment, each projection through-hole 24 is rectangular in cross section with long sides L1 in the normal direction R and short sides L2 in the tangential direction *θ*. The projection through-holes 24 are arranged at equal intervals in the tangential direction *θ*. The projection through-holes 24 are slightly larger than the projections 12. The projections 12 are fitted in the corresponding projection through-holes 24 to position the weld nut 10 on the front surface 21 of the plate member 20.

As illustrated in FIG. 1, the washer 30 is placed on the back surface 22 of the plate member 20. More specifically, the washer 30 is fitted in the recess portion 22a on the back surface 22 of the plate member 20. The washer 30 is, for example, circular, ring-shaped in transverse cross-section. That is, the transverse cross-sections of the washer 30 and the recess portion 22a correspond to each other. It is preferable that the radius of the washer 30 be equal to or slightly smaller than that of the recess portion 22a. It is preferable that the thickness of the washer 30 be equal to or slightly smaller than the depth of the recess portion 22a. That is, it is preferable that the washer 30 be fitted in the recess portion 22a of the plate member 20 in such a way that the back surface (the lower surface in FIG. 1) 32 of the washer 30 is flush with the back surface 22 or recessed toward the front surface 21 in the region of the back surface 22 of the plate member 20 other than the recess portion 22a.

In this embodiment, the washer 30 is made of steel. The washer 30 is weldable to the weld nut 10.

In general, the washer 30 is provided for various purposes, such as prevention of loosening of bolts, protection of a bearing surface, and airtightness.

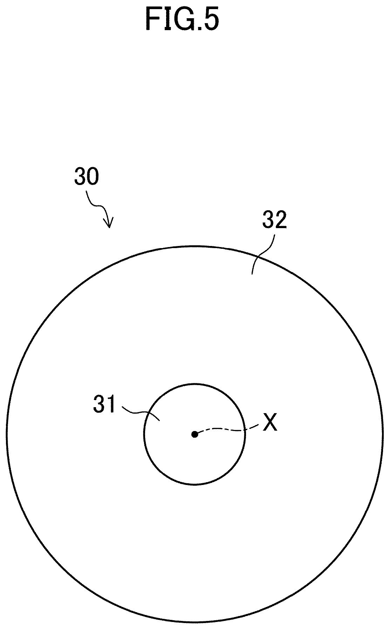

As illustrated in FIG. 5, the washer 30 has, at its center, a bolt through-hole 31 for passing the screw 41 of the component assembling bolt 40 therethrough. The bolt through-hole 31 is located on the center axis X. The bolt through-hole 31 may be slightly eccentric from the center axis X, as long as at least a part of the bolt through-hole 31 is included on the center axis X.

As illustrated in FIG. 1, the projections 12 of the weld nut 10 are caused to penetrate the corresponding projection through-holes 24 of the plate member 20, and welded to the washer 30 as such. In other words, the weld nut 10 and the washer 30 are welded to each other via the projections 12 penetrating the corresponding projection through-holes 24. W in FIG. 1 denotes a weld (nugget) between each projection 12 and the washer 30.

That is, the weld nut 10 is not directly welded to the front surface 21 of the plate member 20 but is joined to the front surface 21 of the plate member 20 via the projections 12 of the weld nut 10 and the washer 30 welded to each other.

The projections 12 of the weld nut 10 are welded to the washer 30 by resistance spot welding, for example. That is, the weld nut 10 and the washer 30 are sandwiched between a pair of electrodes (not shown) and electrified across the pair of electrodes under pressing to press the weld nut 10 and the washer 30 together. As a result of this, the projections 12 and the washer 30 are welded together. The welding melts and crushes a distal end of each projection 12, thereby fixing the projection 12 and the corresponding projection through-hole 24 together as if being pseudo-caulked together. In addition, the weld nut 10 and the washer 30 are welded to each other via the projection through-holes 24 (the projections 12) with the plate member 20 interposed therebetween, thereby being as if pseudo-pressure-bonded to the corresponding surfaces (i.e., either the front surface 21 or the back surface 22) of the plate member 20.

As illustrated in FIG. 1, the weld nut 10 and the component assembling bolt 40 are used to assemble a component (i.e., a workpiece) 2 to the plate member 20. The component 2 has a bolt through-hole 2a for passing the screw 41 of the component assembling bolt 40 therethrough. In FIG. 1, the solid lines represent a state before assembling the component 2 to the plate member 20, while two-dot chain lines represent a state after the assembling.

When assembling the component 2 to the plate member 20, first, the screw 41 of the component assembling bolt 40 is inserted through the bolt through-hole 2a of the component 2, as illustrated in FIG. 1. Next, the screw 41 of the component assembling bolt 40 passes through the bolt through-hole 31 of the washer 30 and the bolt through-hole 23 of the plate member 20 from the back surface 22 of the plate member 20. Next, the screw 41 of the component assembling bolt 40 is screwed into the bolt hole 13 of the weld nut 10 on the front surface 21 of the plate member 20. With a predetermined tightening torque T applied thereon, the component assembling bolt 40 is screwed down to the weld nut 10.

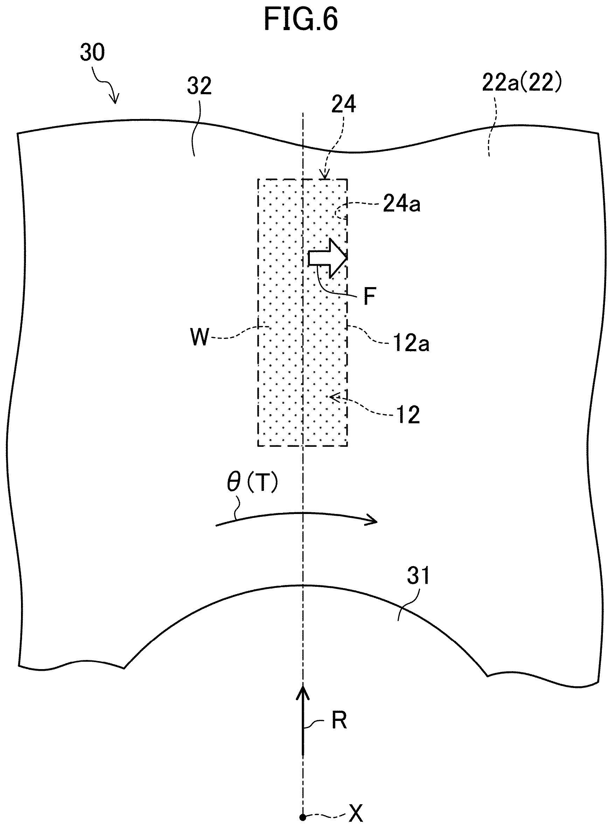

As shown in FIG. 6, the application of the tightening torque T for screwing the component assembling bolt 40 down to the weld nut 10 causes the outer peripheral surface 12a (facing in the tangential direction *θ*) of each projection 12 of the weld nut 10 to be pressed, with a pressing force F, onto the inner peripheral surface 24a (facing in the tangential direction *θ*) of the corresponding projection through-hole 24 of the plate member 20. That is, the tightening torque T is received by the inner peripheral surface 24a (facing in the tangential direction *θ*) of each projection through-hole 24 by resisting against the pressing force F.

As described above, according to the invention, the weld nut 10 is not directly welded to the front surface 21 of the plate member 20 but is welded to the washer 30 on the back surface 22 of the plate member 20 with the projections 12 of the weld nut 10 penetrating the corresponding projection through-holes 24 from the front surface 21 of the plate member 20. That is, the weld nut 10 is welded to the washer 30 via the projection through-holes 24 (projections 12) with the plate member 20 interposed therebetween, thereby being joined to the front surface 21 of the plate member 20. With this configuration, even if the weld nut 10 and the plate member 20 are made of dissimilar materials that are difficult to weld together, the weld nut 10 and the plate member 20 can be joined to each other.

When assembling the component (i.e., the workpiece) 2 to the back surface 22 of the plate member 20 by a bolt and a nut, the component assembling bolt 40, passing through the bolt through-hole 31 of the washer 30 and the bolt through-hole 23 of the plate member 20 from the back surface 22 of the plate member 20, is screwed down to the weld nut 10 on the front surface 21 of the plate member 20.

The application of the tightening torque T for screwing the component assembling bolt 40 down to the weld nut 10 biases the weld nut 10 to rotate with respect to the plate member 20. Here, the weld nut 10 and the washer 30 are welded to each other with the plate member 20 interposed therebetween via the projection through-holes 24 (the projections 12), thereby being substantially pressure-bonded to the corresponding surfaces (i.e., the front and back surfaces 21 and 22) of the plate member 20.

This is advantageous in preventing the weld nut 10 from rotating with respect to the plate member 20. That is, the washer 30 has not only the function of joining the weld nut 10 to the plate member 20, but also the function of preventing the weld nut 10 from rotating with respect to the plate member 20. If the component 2 is made of a soft material, such as aluminum, a resin, or fibers, the washer 30 can also have the function of preventing loosening of the component assembling bolt 40.

Therefore, the washer 30 has the functions other than joining the weld nut 10 to the plate member 20. There is thus no need to prepare any dedicated member only for joining the weld nut 10 to the plate member 20.

As described above, the configuration eliminates the need for any dedicated member only for joining the weld nut 10 and the plate member 20 made of different materials.

The tightening torque T for screwing the component assembling bolt 40 down to the weld nut 10 causes the outer peripheral surface 12a (facing in the tangential direction *θ*) of each projection 12 of the weld nut 10 to be pressed, with the pressing force F, onto the inner peripheral surface 24a (facing in the tangential direction *θ*) of the corresponding projection through-hole 24 of the plate member 20 (see FIG. 6). According to the invention, the projections 12 and the projection through-holes 24 are each longer in the normal direction R, which provides a larger contact area between the tangential direction *θ*-facing outer peripheral surface 12a of each projection 12 and the tangential direction *θ*-facing inner peripheral surface 24a of the corresponding projection through-hole 24. This reduces the stress (the pressing force F/the contact area) received by the tangential direction *θ*-facing inner peripheral surface 24a of each projection through-hole 24 from the tangential direction *θ*-facing outer peripheral surface 12a of the corresponding projection 12. As a result, this configuration can bear a larger tightening torque T.

The recess portion 22a facilitates easy positioning of the washer 30 on the back surface 22 of the plate member 20.

At the time of the resistance spot welding, the distal end of each projection 12 is melted and crushed so that each projection 12 and the corresponding projection through-hole 24 are substantially caulked. Accordingly, the weld nut 10 is less displaced from the plate member 20 in the tangential direction *θ* or the normal direction R.

The back surface 32 of the washer 30 is flush with the back surface 22 of the plate member 20 or recessed toward the front surface 21, thereby making it possible to more reliably fix, to the plate member 20, the component 2 to be assembled by use of the component assembling bolt 40.

Although the present invention has been described above with reference to the preferable embodiment, the description is not to limit the invention. Needless to say, various variations can be made in the preferable embodiment, as long as they fall within the wording of the appended claims.

Examples of conceivable combinations of the materials of the weld nut 10 and the plate member 20 include a combination of steel and titanium (including titanium alloy), a combination of steel and a resin, a combination of steel and carbon fibers, and other various combinations, besides the combination of steel and aluminum.

Examples of conceivable combinations of the materials of the weld nut 10 and the washer 30 include a combination of aluminum and aluminum, a combination of titanium and titanium, and other various combinations, besides the combination of steel and steel. Examples of conceivable combinations of steel and steel include a combination of carbon steel and carbon steel, a combination of stainless steel and stainless steel, and a combination of carbon steel and stainless steel, and other various combinations.

The projections 12 and the projection through-holes 24 are not necessarily plural, and at least one projection 12 and at least one projection through-hole 24 may be provided.

The recess portion 22a is omittable. If the plate member 20 has no recess portion 22a on the back surface 22, it is preferable that the component 2 have a recess.

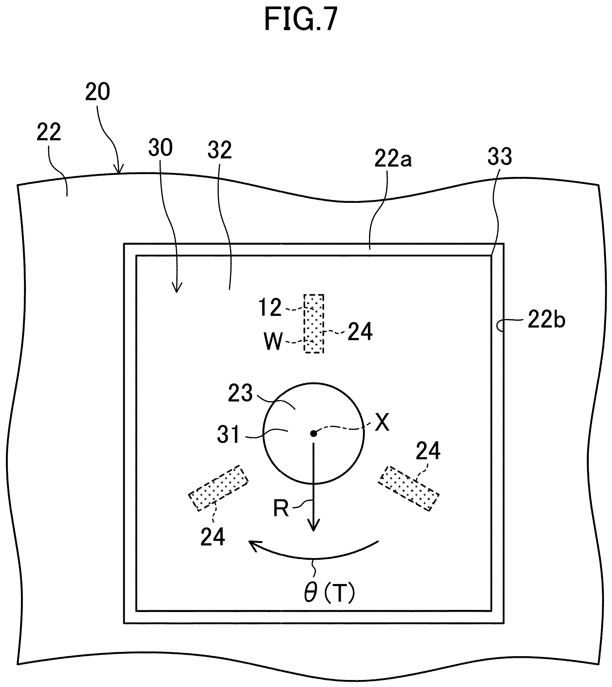

The configuration is not limited to the above-described embodiment in which the washer 30 and the recess portion 22a each are circular in transverse cross-section. For example, the washer 30 and the recess portion 22a may have polygonal transverse cross-sections corresponding to each other. In such a case, the transverse cross-sections of the washer 30 and the recess portion 22a have the same number of corners in one preferred embodiment. For example, the washer 30 and the recess portion 22a may be rectangular in transverse cross-sections corresponding to each other, as illustrated in FIG. 7. The tightening torque T for screwing the component assembling bolt 40 down to the weld nut 10 biases the weld nut 10 to rotate with respect to the plate member 20. This causes the projections 12 to pull the washer 30, thereby biasing the washer 30 to rotate. With the configuration in which the washer 30 and the recess portion 22a are polygonal in transverse cross-section, correspondingly to each other, the bias to rotate the washer 30 causes corners 33 of the washer 30 to abut the inner peripheral surface 22b of the recess portion 22a, thereby preventing the rotation of the washer 30. That is, the configuration also prevents the weld nut 10 welded to the washer 30 from rotating. As a result of this, it becomes possible to bear a larger tightening torque T as compared to the configuration with the washer 30 and the recess portion 22a with circular transverse cross-sections.

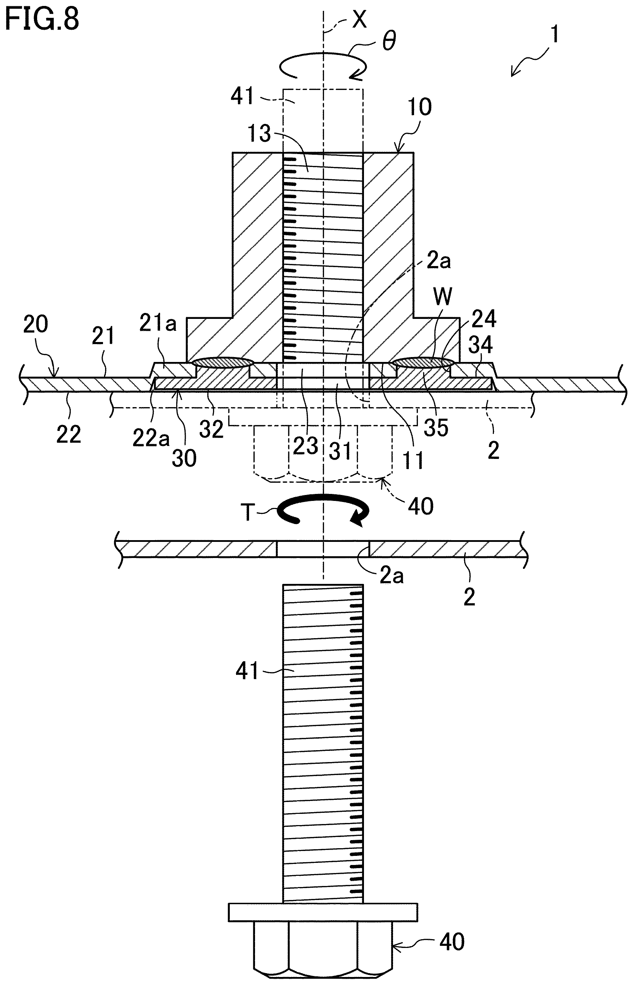

The present disclosure is not limited to the above-described embodiment in which the projections 12 are located on the bearing surface 11 of the weld nut (i.e., the first tightening member) 10. As shown in FIG. 8, it may be so configured that not the weld nut (i.e., the first tightening member) 10 but a bearing surface 34 of the washer 30 has projections 35 thereon. In this case, it is preferable that the bearing surface 11 of the weld nut (i.e., the first tightening member) 10 be flat without any projection 12. Although not illustrated, it may be so configured that both the weld nut (i.e., the first tightening member) 10 and the washer 30 have projections 12 and 35, respectively. That is, it is sufficient that at least either the bearing surface 11 of the weld nut (i.e., the first tightening member) 10 or the bearing surface 34 of the washer 30 has the projections 12 or 35 thereon.

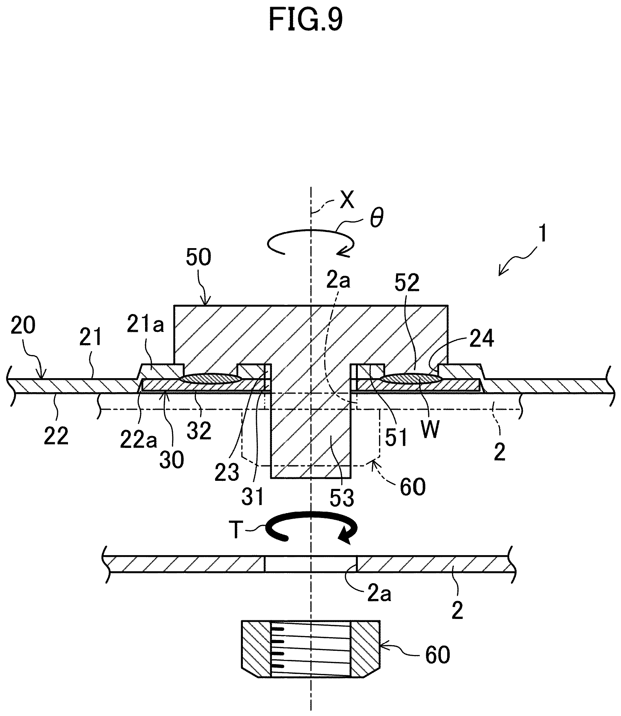

The present disclosure is not limited to the above-described embodiment in which the first tightening member is the weld nut 10 and the second tightening member is the component assembling bolt 40. As illustrated in FIG. 9, it may be so configured that the first tightening member is a weld bolt 50 and the second tightening member is a component assembling nut 60. In this case, the weld bolt (i.e., the first tightening member) 50 and the component assembling nut (i.e., the second tightening member) 60 correspond to each other. Moreover, it is sufficient that at least either the bearing surface 51 of the weld bolt (i.e., the first tightening member) 50 or the bearing surface 34 of the washer 30 has the projections 52 or 35 thereon. For example, as illustrated in FIG. 9, the weld bolt 50 may have, on the bearing surface 51, projections 52, which penetrate the corresponding projection through-holes 24 of the plate member 20. A screw 53 of the weld bolt 50 is inserted through the bolt through-hole 23 of the plate member 20. That is, the first tightening member is one of a nut or a bolt, while the second tightening member is the other of the nut or the bolt, and the first and second tightening members are configured to correspond to each other. It is sufficient that the bolt through-hole 23 is a hole for passing that one of the first and second tightening members (i.e., the weld bolt 50 or the component assembling bolt 40) which is the bolt.

The component (i.e., the workpiece) 2 may have any configuration as long as the component can be assembled to the plate member 20 with a bolt and a nut.

The welding method for welding the projections 12 and the washer 30 together is not limited to the resistance spot welding, but may be arc welding, for example.

A dissimilar material joining method according to the present invention is a method of joining a first tightening member (e.g., a weld nut 10 or a weld bolt 50) to a plate member 20 made of a material different from the first tightening member (e.g., the weld nut 10 or the weld bolt 50), the first tightening member being one of a nut or a bolt, the dissimilar material joining method including: arranging the first tightening member (e.g., the weld nut 10 or the weld bolt 50) on a front surface 21 of the plate member 20, and a washer 30 on a back surface 22 of the plate member 20, the washer 30 being weldable to the first tightening member (e.g., the weld nut 10 or the weld bolt 50); and joining the first tightening member (e.g., the weld nut 10 or the weld bolt 50) to the plate member 20, at least one of the first tightening member (e.g., the weld nut 10 or the weld bolt 50) or the washer 30 including a projection 12, 52, 35 on a bearing surface 11, 51, 34 thereof, the first tightening member (e.g., the weld nut 10 or the weld bolt 50) being configured to correspond to a second tightening member (e.g., a component assembling bolt 40 or a component assembling nut 60) which is the other of the nut or the bolt, the plate member 20 having: a bolt through-hole 23 for passing therethrough that one of the first tightening member (e.g., the weld nut 10 or the weld bolt 50) or the second tightening member (e.g., the component assembling bolt 40 or the component assembling nut 60) which is the bolt (i.e., the weld bolt 50 or the component assembling bolt 40); and a projection through-hole 24 on a periphery of the bolt through-hole 23, the projection through-hole 24 being penetrable by the projection 12, 52, 35, and the joining including joining the first tightening member (e.g., the weld nut 10 or the weld bolt 50) to the plate member 20 by welding the first tightening member (e.g., the weld nut 10 or the weld bolt 50) to the washer 30 via the projection 12, 52, 35 penetrating the projection through-hole 24, wherein each of the projection and the projection through-hole 24 are longer in a radial direction R than in a circumferential direction Θ about the center axis X.

### INDUSTRIAL APPLICABILITY

The present invention is applicable to a dissimilar material joint structure and a dissimilar material joining method and is thus very useful and highly industrially applicable.

### DESCRIPTION OF REFERENCE CHARACTERS

- X: Center Axis
- *Θ*: Tangential Direction
- R: Normal Direction
- 1: Dissimilar Material Joint Structure
- 10: Weld Nut (First tightening member)
- 11: Bearing Surface
- 12: Projection
- 20: Plate Member
- 21: Front Surface
- 22: Back Surface
- 22a: Recess Portion
- 23: Bolt Through-Hole
- 24: Projection Through-Hole
- 30: Washer
- 34: Bearing Surface
- 35: Projection
- 40: Component Assembling Bolt (Second tightening member)
- 50: Weld Bolt (First tightening member)
- 51: Bearing Surface
- 52: Projection
- 60: Component Assembling Nut (Second tightening member)

## Claims

1. A dissimilar material joint structure (1), comprising:
a plate member (20);
a first tightening member (10, 50) on a front surface (21) of the plate member, the first tightening member being one of a nut or a bolt; and
a washer (30) on a back surface (22) of the plate member, the washer being weldable to the first tightening member,
the first tightening member and the plate member being made of dissimilar materials different from each other,
at least one of the first tightening member or the washer including a projection (12, 35, 52) on a bearing surface (11, 34, 51) thereof,
the first tightening member being configured to correspond to a second tightening member (40, 60) which is the other of the nut or the bolt,
the plate member having:
a bolt through-hole (23) located on a center axis (X) of the first tightening member, for passing therethrough that one of the first tightening member or the second tightening member which is the bolt, and
a projection through-hole (24) located on a periphery of the bolt through-hole, the projection through-hole being penetrable by the projection, and
the first tightening member being not directly welded to the plate member but joined to the plate member by being welded to the washer via the projection penetrating the projection through-hole;
**characterized in that** each of the projection (12) and the projection through-hole (24) are longer in a radial direction (R) than in a circumferential direction (*θ*) about the center axis (X).

2. The dissimilar material joint structure (1) of claim 1, wherein
the washer (30) is fitted in a recess (22a) on the back surface (22) of the plate member (20).

3. The dissimilar material joint structure (1) of claim 2, wherein
the washer (30) and the recess (22a) are polygonal in transverse cross-section, correspondingly to each other.

4. The dissimilar material joint structure (1) of any of claims 1 to 3, wherein
the first tightening member (10, 50) is a nut.

5. The dissimilar material joint structure (1) of any of claims 1 to 4, wherein
the projection (12, 35, 52) is located on the bearing surface (11, 34, 51) of the first tightening member (10, 50).

6. A dissimilar material joining method of joining a first tightening member (10, 50) to a plate member (20) made of a material different from the first tightening member, the first tightening member being one of a nut or a bolt, the dissimilar material joining method comprising:
arranging the first tightening member on a front surface (21) of the plate member, and a washer (30) on a back surface (22) of the plate member, the washer being weldable to the first tightening member; and
joining the first tightening member to the plate member,
at least one of the first tightening member or the washer including a projection on a bearing surface (11, 34, 51) thereof,
the first tightening member being configured to correspond to a second tightening member (40, 60) which is the other of the nut or the bolt,
the plate member having:
a bolt through-hole (23) for passing therethrough that one of the first tightening member or the second tightening member which is the bolt; and
a projection through-hole (24) on a periphery of the bolt through-hole, the projection through-hole being penetrable by the projection, and
the joining including joining the first tightening member to the plate member by welding the first tightening member to the washer via the projection penetrating the projection through-hole;
**characterized in that** each of the projection (12) and the projection through-hole (24) are longer in a radial direction (R) than in a circumferential direction (*θ*) about the center axis (X).

## Patentansprüche

1. Verbindungsstruktur (1) aus unterschiedlichem Material, umfassend:
ein Plattenelement (20);
ein erstes Spannelement (10, 50) an einer Vorderfläche (21) des Plattenelements, wobei das erste Spannelement eines von einer Mutter oder einer Schraube ist; und
eine Unterlegscheibe (30) auf einer Rückfläche (22) des Plattenelements, wobei die Unterlegscheibe mit dem ersten Spannelement verschweißbar ist,
das erste Spannelement und das Plattenelement aus unterschiedlichen Materialien hergestellt sind, die voneinander verscheiden sind,
wobei mindestens eines von dem ersten Spannelement oder der Unterlegscheibe einen Vorsprung (12, 35, 52) auf einer Auflagefläche (11, 34, 51) davon enthält,
wobe das erste Spannelement so eingerichtet ist, dass es einem zweiten Spannelement (40, 60) entspricht, das das andere von der Mutter oder der Schraube ist,
wobei das Plattenelement Folgendes aufweist:
ein Schrauben-Durchgangsloch (23), das sich auf einer Mittelachse (X) des ersten Spannelements befindet, um dort dasjenige des ersten Spannelements oder des zweiten Spannelements hindurchzuführen, das die Schraube ist, und
ein Vorsprungs-Durchgangsloch (24), das sich an einem Umfang des Schrauben-Durchgangslochs befindet, wobei das Vorsprungs-Durchgangsloch von dem Vorsprung durchdringbar ist, und
wobei das erste Spannelement nicht direkt mit dem Plattenelement verschweißt, sondern mit dem Plattenelement verbunden ist, indem es über den Vorsprung, der das Vorsprungs-Durchgangsloch durchdringt, mit der Unterlegscheibe verschweißt wird;
**dadurch gekennzeichnet, dass** der Vorsprung (12) und das Vorsprungs-Durchgangsloch (24) jeweils in einer radialen Richtung (R) länger sind als in einer Umfangsrichtung (θ) um die Mittelachse (X).

2. Verbindungsstruktur (1) aus unterschiedlichem Material nach Anspruch 1, wobei
die Unterlegscheibe (30) in einer Aussparung (22a) an der Rückseite (22) des Plattenelements (20) angebracht ist.

3. Verbindungsstruktur (1) aus unterschiedlichem Material nach Anspruch 2, wobei
die Unterlegscheibe (30) und die Aussparung (22a) im Querschnitt entsprechend zueinander polygonal sind.

4. Verbindungsstruktur (1) aus unterschiedlichem Material nach einem der Ansprüche 1 bis 3, wobei das erste Spannelement (10, 50) eine Mutter ist.

5. Verbindungsstruktur (1) aus unterschiedlichem Material nach einem der Ansprüche 1 bis 4, wobei
der Vorsprung (12, 35, 52) sich auf der Auflagefläche (11, 34, 51) des ersten Spannelements (10, 50) befindet.

6. Verbindungsverfahren mit unterschiedlichem Material zum Verbinden eines ersten Spannelements (10, 50) mit einem Plattenelement (20), das aus einem anderen Material als das erste Spannelement besteht, wobei das erste Spannelement eine Mutter oder eine Schraube ist, wobei das Verbindungsverfahren mit unterschiedlichem Material Folgendes umfasst:
Anordnen des ersten Spannelements auf einer vorderen Oberfläche (21) des Plattenelements und einer Unterlegscheibe (30) auf einer hinteren Oberfläche (22) des Plattenelements, wobei die Unterlegscheibe mit dem ersten Spannelement verschweißbar ist; und
Verbinden des ersten Spannelements mit dem Plattenelement,
wobei mindestens eines von dem ersten Spannelement oder der Unterlegscheibe einen Vorsprung auf einer Auflagefläche (11, 34, 51) davon enthält,
wobe das erste Spannelement so eingerichtet ist, dass es einem zweiten Spannelement (40, 60) entspricht, das das andere von der Mutter oder der Schraube ist,
wobei das Plattenelement Folgendes aufweist:
ein Schrauben-Durchgangsloch (23), um dort dasjenige des ersten Spannelements oder des zweiten Spannelements hindurchzuführen, das die Schraube ist; und
ein Vorsprungs-Durchgangsloch (24) an einem Umfang des Schrauben-Durchgangslochs, wobei das Vorsprungs-Durchgangsloch von dem Vorsprung durchdringbar ist, und
wobei das Verbinden das Verbinden des ersten Spannelements mit dem Plattenelement durch Verschweißen des ersten Spannelements mit der Unterlegscheibe über den Vorsprung, der das Vorsprungsdurchgangsloch durchdringt, enthält;
**dadurch gekennzeichnet, dass** der Vorsprung (12) und das Vorsprungs-Durchgangsloch (24) jeweils in einer radialen Richtung (R) länger sind als in einer Umfangsrichtung (θ) um die Mittelachse (X).

## Revendications

1. Structure d'assemblage de matériaux dissemblables (1), comprenant :
un élément de plaque (20) ;
un premier élément de serrage (10, 50) sur une surface avant (21) de l'élément de plaque, le premier élément de serrage étant l'un parmi un écrou ou un boulon ; et
une rondelle (30) sur une surface arrière (22) de l'élément de plaque, la rondelle pouvant être soudée au premier élément de serrage,
le premier élément de serrage et l'élément de plaque étant constitués de matériaux dissemblables différents l'un de l'autre,
au moins l'un parmi le premier élément de serrage ou la rondelle comprenant une saillie (12, 35, 52) sur une surface d'appui (11, 34, 51) de celui-ci,
le premier élément de serrage étant configuré pour correspondre à un second élément de serrage (40, 60) qui est l'autre parmi l'écrou ou le boulon,
l'élément de plaque ayant :
un trou traversant de boulon (23) situé sur un axe central (X) du premier élément de serrage pour permettre le passage à travers celui-ci, de celui parmi le premier élément de serrage ou le second élément de serrage qui constitue le boulon, et
un trou traversant de saillie (24) situé sur une périphérie du trou traversant de boulon, le trou traversant de saillie pouvant être traversé par la saillie, et
le premier élément de serrage n'étant pas directement soudé à l'élément de plaque mais étant assemblé à l'élément de plaque en étant soudé à la rondelle par l'intermédiaire de la saillie traversant le trou traversant de saillie ;
**caractérisée en ce que** chacun de la saillie (12) et du trou traversant de saillie (24) sont plus longs dans une direction radiale (R) que dans une direction circonférentielle (*θ*) autour de l'axe central (X).

2. Structure d'assemblage de matériaux dissemblables (1) selon la revendication 1, dans laquelle
la rondelle (30) est ajustée dans un évidement (22a) sur la surface arrière (22) de l'élément de plaque (20).

3. Structure d'assemblage de matériaux dissemblables (1) selon la revendication 2, dans laquelle
la rondelle (30) et l'évidement (22a) ont des sections transversales polygonales correspondant l'une à l'autre.

4. Structure d'assemblage de matériaux dissemblables (1) selon l'une des revendications 1 à 3, dans laquelle
le premier élément de serrage (10, 50) est un écrou.

5. Structure d'assemblage de matériaux dissemblables (1) selon l'une des revendications 1 à 4, dans laquelle
la saillie (12, 35, 52) est située sur la surface d'appui (11, 34, 51) du premier élément de serrage (10, 50).

6. Procédé d'assemblage de matériaux dissemblables pour assembler un premier élément de serrage (10, 50) à un élément de plaque (20) constitué d'un matériau différent de celui du premier élément de serrage, le premier élément de serrage étant l'un parmi un écrou ou un boulon, le procédé d'assemblage de matériaux dissemblables comprenant :
l'agencement du premier élément de serrage sur une surface avant (21) de l'élément de plaque, et d'une rondelle (30) sur une surface arrière (22) de l'élément de plaque, la rondelle pouvant être soudée au premier élément de serrage ; et
l'assemblage du premier élément de serrage à l'élément de plaque,
au moins l'un parmi le premier élément de serrage ou la rondelle comprenant une saillie sur une surface d'appui (11, 34, 51) de celui-ci,
le premier élément de serrage étant configuré pour correspondre à un second élément de serrage (40, 60) qui est l'autre parmi l'écrou ou le boulon,
l'élément de plaque ayant :
un trou traversant de boulon (23) pour permettre le passage à travers celui-ci, de celui parmi le premier élément de serrage ou le second élément de serrage qui constitue le boulon ; et
un trou traversant de saillie (24) sur une périphérie du trou traversant de boulon, le trou traversant de saillie pouvant être traversé par la saillie, et
l'assemblage comprenant l'assemblage du premier élément de serrage à l'élément de plaque par soudage du premier élément de serrage à la rondelle par l'intermédiaire de la saillie traversant le trou traversant de saillie ;
**caractérisée en ce que** chacun de la saillie (12) et du trou traversant de saillie (24) sont plus longs dans une direction radiale (R) que dans une direction circonférentielle (*θ*) autour de l'axe central (X).
